# EUROPEAN PATENT SPECIFICATION

(11) **EP 2 775 385 B1**
(45) Date of publication and mention of the grant of the patent: **17.04.2019**
(21) Application number: 14154913.9
(22) Date of filing: 12.02.2014
(51) Int. Cl.: G06F 3/0488, G11B 27/34, G06F 3/0484

(54) **Mobile apparatus having function of pre-action on object and control method thereof**
Mobile Vorrichtung mit Funktion für eine Voraktion auf einem Objekt und Steuerverfahren dafür
Appareil mobile possédant une fonction de pré-action sur un objet et son procédé de commande

(30) Priority: 06.03.2013 KR 20130023881
(43) Date of publication of application: 10.09.2014
(73) Proprietor: Samsung Electronics Co., Ltd., Gyeonggi-do 443-742 (KR)
(72) Inventor: Jin, Hyung-Joo, 443-742 Gyeonggi-do (KR); Lee, Jae-Myoung, 443-742 Gyeonggi-do (KR); Jang, Chul-Ho, 443-742 Gyeonggi-do (KR)
(74) Representative: HGF Limited

(56) References cited:
- EP-A2- 2 302 497
- EP-A2- 2 413 226
- EP-A2- 2 530 577
- WO-A2-2012/075295
- US-A1- 2010 107 080

## Description

### BACKGROUND OF THE INVENTION

### 1. Field of the Invention:

The present invention relates to a mobile apparatus and a control method thereof. For example, the present invention relates to a mobile apparatus having a function of a pre-action on an object and a method thereof.

### 2. Description of the Related Art:

A mobile apparatus is provided with a touch screen so that the mobile apparatus can be controlled only with a touch on the touch screen by a user. Various objects may be displayed on the mobile apparatus and the mobile apparatus may be controlled by detecting the selection of the object displayed on the touch screen.

However, in many cases, several touches are required for performing various functions on the object. Therefore, the user may feel inconvenienced due to the several touches.

For example, the user should select a video file in order to perform a preview of the video file. At this point, a touch operation is needed and if the video file is selected, the video file may be reproduced. Thereafter, the adjustment unit that can adjust the reproduction point of the video file may be displayed. At this point, the user may view the preview by touching the adjustment unit that can adjust the reproduction point. At this point, another touch is needed.

Therefore, the user should go through two or more touches or operations to watch the preview of the video file. In this manner, a plurality of touches are required to use various functions on the mobile apparatus. Accordingly, at the time of using various services that can be implemented in the mobile apparatus, a technique that can provide the service via minimum touches or operations is needed.

Therefore, a need exists for a mobile apparatus that can directly perform a pre-action by detecting a pre-action gesture without entering an operation for an execution on an object, and a control method thereof. EP 2302497 discloses a mobile terminal, and a method for controlling the display of data link items on the touchscreen of the terminal. The mobile terminal may receive an input of a preview command signal for a first data link item displayed on the screen, and display a first data display window.
WO 2012/075295 discloses a user interface configured to present a plurality of user-selectable icons. Each user-selectable icon is individually configured to trigger playing of different streaming media content in an area on the user interface of the icon upon a hover action by the user.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a mobile apparatus that can directly perform a pre-action by detecting a pre-action gesture without entering an operation for an execution on an object, and a control method thereof.

An aspect of the present invention is to provide a mobile apparatus that can directly perform a preview display corresponding to a pre-action by detecting a pre-action gesture without entering an operation for the execution of the preview display on an object, which is a thumbnail of a video file.

Another aspect of the present invention is to provide a mobile apparatus that can use an object as a pre-action controller, and a control method thereof.

In accordance with an aspect of the present invention, a method of controlling a mobile apparatus having a function of a pre-action in an object is provided. The method includes displaying at least one object on a touch screen, detecting a pre-action gesture input on a first object among the at least one object, wherein the pre-action comprises at least one of a flick, a drag and a hovering on the object; and in response to receiving the pre-action gesture on the first object, displaying, from a position of the first object on the touch screen, a preview display of the first object, wherein the preview display comprises sequentially displaying preview images in a time sequence, along one axis, wherein each subsequent preview image overlaps the previous image in the sequence, and wherein displaying the preview display further comprises shortening positional distances among the displayed preview images as the pre-action gesture is slower, and lengthening positional distances among preview images as the pre-action gesture is faster.

In accordance with another aspect of the present invention, a mobile apparatus having a function of a pre-action on an object is provided. The apparatus includes a touch screen for displaying at least one object, and a controller configured to: detect a pre-action gesture input on a first object among the at least one object, wherein the pre-action gesture comprises at least one of a flick, a drag and a hovering on the object; in response to receiving the pre-action gesture on the first object, display, from a position of the first object on the touch screen, a preview display of the first object, wherein the preview display comprises sequentially displaying preview images in a time sequence, along one axis, wherein each subsequent preview image overlaps the previous image in the sequence, and wherein the controller is configured to display the preview display by shortening positional distances among the displayed preview images as the pre-action gesture is slower, and for lengthening positional distances among preview images as the pre-action gesture is faster.

Another aspect of the present invention provides an advantageous effect of directly performing a pre-action by detecting a pre-action gesture without entering an operation for execution on the object.

Another aspect of the present invention provides an advantageous effect of directly performing a preview display corresponding to a pre-action by detecting a pre-action gesture without entering an operation for execution of the preview display on the object, which is a thumbnail of a video file.

Another aspect of the present invention provides an advantageous effect of using an object as a pre-action controller.

Other aspects, advantages, and salient features of the invention will become apparent to those skilled in the art from the following detailed description, which, taken in conjunction with the annexed drawings, discloses various embodiments of the invention. Embodiments which are not covered by the claims do not form part of the invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 is a schematic block diagram illustrating a mobile apparatus according to an embodiment of the present invention;
FIG. 2 is a perspective view of a front surface of a mobile apparatus according to an embodiment of the present invention;
FIG. 3 is a perspective view of a back surface of a mobile apparatus according to an embodiment of the present invention;
FIG. 4 is a flowchart illustrating a method of controlling a mobile apparatus having a function of a pre-action on an object according to an embodiment of the present invention;
FIGS. 5A to 5C and FIGS. 6A to 6C are diagrams illustrating functions of a pre-action on an object according to an embodiment of the present invention;
FIG. 7 is a flowchart illustrating a method of controlling a mobile apparatus having a function of a pre-action on an object according to an embodiment of the present invention;
FIGS. 8A to 8C and FIGS. 9A to 9C are diagrams illustrating functions of a pre-action on an object according to an embodiment of the present invention;
FIGS. 10A to 10C and FIGS. 11A to 11C are diagrams illustrating functions of a pre-action on an object according to an embodiment of the present invention;
FIGS. 12A to 12C and FIGS. 13A and 13B are diagrams illustrating functions of a pre-action on an object according to an embodiment of the present invention; and
FIGS. 14A to 14C are diagrams illustrating functions of a pre-action on an object according to an embodiment of the present invention.

The same reference numerals are used to represent the same elements throughout the drawings.

### DETAILED DESCRIPTION OF EMBODIMENTS

The following description with reference to the accompanying drawings is provided to assist in a comprehensive understanding of various embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope und of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of various embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Since embodiments of the present invention may be modified in various manners, and may have various embodiments, specific embodiments are described in detail with reference to figures. However, this is not intended to limit the present invention to the specific embodiments, and it should be understood that the present invention comprises all the modifications, equivalents, and substitutes.

In addition, terms, such as first, second, or the like may be used herein when describing components of the present invention, but the components are not limited by the terminology. Each of these terminologies is not used to define an essence, order or sequence of a corresponding component but used merely to distinguish the corresponding component from other component(s). For example, a first component may be named as a second component, without departing from the scope of the claims of the present invention, and similarly a second component may be named as a first embodiment. The term "and/or" includes a combination of related items or any one of the related items.

It should be noted that if it is described in the specification that one component is "connected," "coupled" or "joined" to another component, a third component may be "connected," "coupled," and "joined" between the first and second components, although the first component may be directly connected, coupled or joined to the second component. Unless it is defined otherwise, a singular expression includes a plural expression. The terms "comprise," "include," "have" and any variations thereof is intended to include the presence of stated features, integers, operations, components, but not to preclude the presence or addition of one or more features, integers, operations, components or groups thereof.

Unless otherwise defined, all terms including technical and scientific terms used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

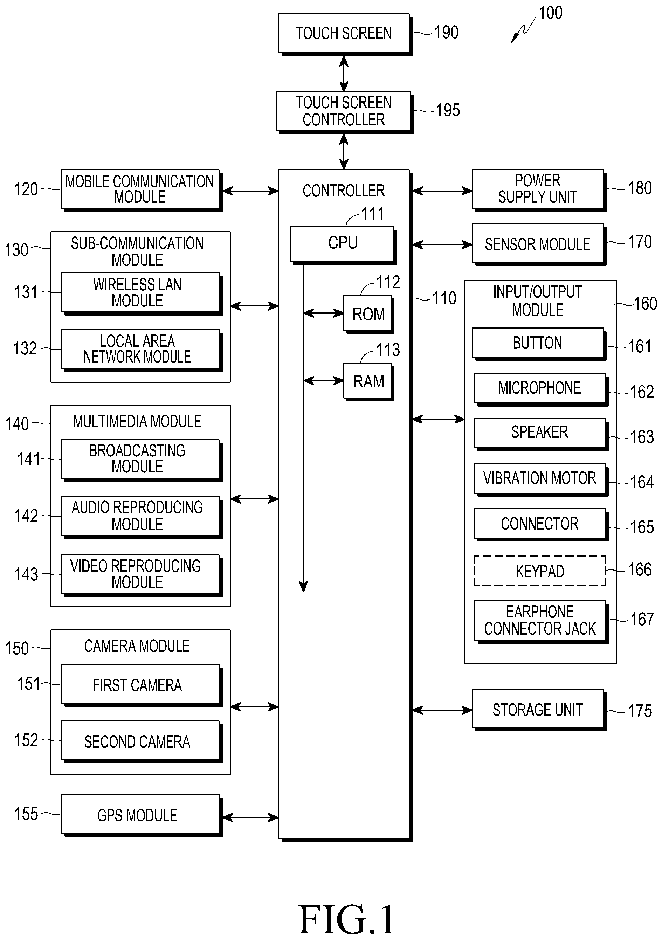

FIG. 1 is a schematic block diagram illustrating a mobile apparatus according to an embodiment of the present invention.

Referring to FIG. 1, an apparatus 100 may be connected to an external apparatus (not illustrated) using an external apparatus connecting unit, such as a sub-communication module 130, a connector 165, and an earphone connector jack 167. The "external apparatus" may include various apparatuses which are detachably attached to the apparatus 100 and connectable by a wire, such as an earphone, an external speaker, a Universal Serial Bus (USB) memory, a recharger, a cradle, a docking station, a Digital Multimedia Broadcasting (DMB) antenna, a mobile payment related apparatus, a health care apparatus (a blood glucose meter or the like), a game machine, a car navigation apparatus, and the like. Further, the "external apparatus" may include a Bluetooth communication apparatus that is wirelessly connectable to the apparatus 100 via a local area network, a local area network apparatus, such as aNear Field Communication (NFC) apparatus, a WiFi Direct communication apparatus, and a wireless Access Point (AP). In addition, the external apparatus may include other apparatuses, such as a cellular phone, a smart phone, a tablet Personal Computer (PC), a desktop PC, a server, and the like.

Referring to FIG. 1, the apparatus 100 may include a touch screen 190 and a touch screen controller 195. In addition, the apparatus 100 may include a controller 110, a mobile communication module 120, the sub-communication module 130, a multimedia module 140, a camera module 150, a Global Positioning System (GPS) module 155, an input/output module 160, a sensor module 170, a storage unit 175, and a power supply unit 180. The sub-communication module 130 includes at least one of a wireless Local Area Network (LAN) module 131 and a local area network module 132, and the multimedia module 140 includes at least one of a broadcasting module 141, an audio reproducing module 142, and a video reproducing module 143. The camera module 150 includes at least one of a first camera 151 and a second camera 152, and the input/output module 160 includes at least one of buttons 161, a microphone 162, a speaker 163, a vibration motor 164, the connector 165, a keypad 166, and the earphone connector jack 167.

The controller 110 may include a Central Processing Unit (CPU) 111, a Read Only Memory (ROM) 112 that stores a control program for control of the apparatus 100, and a Random Access Memory (RAM) 113 that stores a signal or data input from the outside of the apparatus 100, or that is used as a storage area for an operation performed in the apparatus 100. The CPU 111 may include a single core, dual cores, triple cores, or quad cores. The CPU 111, the ROM 112, and the RAM 113 may be interconnected via an internal bus.

The controller 110 may control the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195.

The mobile communication module 120 enables the apparatus 100 to be connected to an external apparatus through a mobile communication, in which the mobile communication module 120 may use either one antenna or a plurality of antennas (not illustrated), under the control of the controller 110. The mobile communication module 120 transmits/receives a wireless signal for a voice communication, a video communication, a text message (a Short Message Service (SMS)) or a multimedia message (a Multimedia Message Service (MMS)) with respect to a cellular phone (not illustrated), a smart phone (not illustrated), a tablet PC, or other apparatuses (not illustrated) each of which has a phone number stored in the apparatus 100.

The sub-communication module 130 may include at least one of the wireless LAN module 131 and the local area network module 132. For example, the sub-communication module 130 may include the wireless LAN module 131 only, the local area network module 132 only, or both of the wireless LAN module 131 and the local area network module 132.

The wireless LAN module 131 may be connected to the Internet at a location where a wireless Access Point (AP) (not illustrated) is installed, under the control of the controller 110. The wireless LAN module 131 conforms to a wireless LAN standard 802.11x of the Institute of Electrical and Electronics Engineers (IEEE). The local area network module 132 may wirelessly perform a local area network communication between the apparatus 100 and an image forming apparatus (not illustrated), under the control of the controller 110. The local area network scheme may include Bluetooth, an infrared communication (an Infrared Data Association (IrDA), a WiFi-Direct communication, a Near Field Communication (NFC), and the like.

The apparatus 100 may include at least one of the mobile communication module 120, the wireless LAN module 131, and the local area network module 132, depending on the performance. For example, the apparatus 100 may include a combination of the mobile communication module 120, the wireless LAN module 131, and the local area network module 132, depending on the performance.

The multimedia module 140 includes the broadcasting module 141, the audio reproducing module 142, or the video reproducing module 143. The broadcasting module 141 may receive a broadcasting signal (for example, a TV broadcasting signal, a radio broadcasting signal, or a data broadcasting signal) sent from a broadcasting station via a broadcasting antenna (not illustrated) and additional broadcasting information (for example, an Electronic Program Guide (EPG) or an Electronic Service Guide (ESG)), under the control of the controller 110. The audio reproducing module 142 may reproduce a digital audio file (for example, a file with a filename extension of mp3, wma, ogg, or wav) stored or received under the control of the controller 110. The video reproducing module 143 may reproduce a digital movie file (for example, a file with a filename extension of mpeg, mpg, mp4, avi, mov, or mkv) stored or received under the control of the controller 110. The video reproducing module 143 may reproduce a digital audio file.

The multimedia module 140 may include the audio reproducing module 142 and the video reproducing module 143, without including the broadcasting module 141. In addition, the audio reproducing module 142 or the video reproducing module 143 of the multimedia module 140 may be included in the controller 110.

The camera module 150 may include at least one of the first camera 151 and the second camera 152 that captures a still image or a moving image, under the control of the controller 110. In addition, the first camera 151 or the second camera 152 may include an auxiliary light source (for example, a flash (not illustrated)) that provides a light intensity required for the capturing. The first camera 151 may be mounted on the front surface of the apparatus 100, and the second camera 152 may be mounted on the back surface of the apparatus 100. Otherwise, the first camera 151 and the second camera 152 may be mounted to neighbor each other (for example, with a distance between the first camera 151 and the second camera 152 being longer than 1 cm and shorter than 8 cm) so that a three-dimensional still image or a three-dimensional moving image may be captured.

The GPS module 155 may receive radio waves from a plurality of GPS satellites (not illustrated) in Earth's orbit, and may calculate the location of the apparatus 100 using the time of arrival from the GPS satellites (not illustrated) to the apparatus 100.

The input/output module 160 may include at least one of a plurality of buttons 161, the microphone 162, the speaker 163, the vibration motor 164, the connector 165, and the keypad 166.

The buttons 161 may be arranged on the front surface, the side surface, or the back surface of the apparatus 100, and may include at least one of a power/lock button, a volume button, a menu button, a home button, a back button, and a search button.

The microphone 162 generates an electric signal upon receiving a voice or a sound under the control of the controller 110.

The speaker 163 may output a sound corresponding to various signals (for example, a wireless signal, a broadcasting signal, a digital audio file, a digital video file, or image capturing) of the mobile communication module 120, the sub-communication module 130, the multimedia module 140, or the camera module 150, to the outside of the apparatus 100 under the control of the controller 110. The speaker 163 may output a sound corresponding to the function performed by the apparatus 100 (for example, a button operation sound corresponding to a phone call, or a ring back tone). One or a plurality of speakers 163 may be formed at an appropriate position(s) on the housing of the apparatus 100.

The vibration motor 164 may convert an electric signal to a mechanical vibration under the control of the controller 110. For example, when the apparatus 100 is in a silent mode, if a voice communication is received from another apparatus (not illustrated), the vibration motor 164 operates. One or a plurality of vibration motors 164 may be formed in the housing of the apparatus 100. The vibration motor 164 may operate in response to the touch operation of the user who touches the touch screen 190 and the continuous movement of a touch on the touch screen 190.

The connector 165 may be used as an interface to connect the apparatus 100 with an external apparatus (not illustrated) or a power source (not illustrated). The apparatus 100 transmits data stored in the storage unit 175 of the apparatus 100 to the external apparatus (not illustrated) or receives data from the external apparatus (not illustrated) via a wire cable connected to the connector 165 under the control of the controller 110. At this point, the external apparatus may be a docking station, and the data may be an input signal transmitted from an external input apparatus, for example, a mouse or a keyboard. In addition, the apparatus 100 receives electric power from a power source (not illustrated) via a wire cable connected to the connector 165, or recharges a battery (not illustrated) using the power source.

The keypad 166 may receive key input from a user to control the apparatus 100. The keypad 166 includes a physical keypad (not illustrated) formed on the apparatus 100 or a virtual keypad (not illustrated) displayed on the touch screen 190. The physical keypad (not illustrated) formed on the apparatus 100 may be excluded depending on the performance or the structure of the apparatus 100.

An earphone (not illustrated) is inserted to an earphone connector jack 167 to be connected to the apparatus 100.

The sensor module 170 includes at least one sensor that detects a state of the apparatus 100. For example, the sensor module 170 may include a proximity sensor that detects whether a user is close to the apparatus 100 and an illuminance sensor that detect the light intensity around the apparatus 100. In addition, the sensor module 170 may include a gyro sensor. The gyro sensor may detect a movement (for example, rotation of the apparatus 100, or acceleration or a vibration applied to the apparatus 100) of the apparatus 100, may detect a point of the compass using the Earth's magnetic field, and may detect a working direction of the gravity. In addition, the sensor module 170 may include an altimeter that detects an altitude by measuring atmospheric pressure. The at least one sensor may detect a state, generate a signal corresponding to the detection, and transmit the generated signal to the controller 110. The at least one sensor of the sensor module 170 may be added or removed, depending on the performance of the apparatus 100.

The storage unit 175 may store a signal or data which is input/output corresponding to movements of the mobile communication module 120, the sub-communication module 130, the multimedia module 140, the camera module 150, the GPS module 155, the input/output module 160, the sensor module 170, and the touch screen 190, under the control of the controller 110. The storage unit 175 may store a control program to control the apparatus 100 or the controller 110 and applications.

The term "storage unit" may include the storage unit 175, the ROM 112 in the controller 110, the RAM 113, or a memory card (not illustrated) (for example, a Secure Digital (SD) card or a memory stick) mounted on the apparatus 100. The storage unit may include a non-volatile memory, a volatile memory, a Hard Disk Drive (HDD), or a Solid State Drive (SSD).

The power supply unit 180 may supply power to one or a plurality of batteries (not illustrated) disposed in the housing of the apparatus 100 under the control of the controller 110. One or a plurality of batteries (not illustrated) supply power to the apparatus 100. In addition, the power supply unit 180 supplies electric power being input from an external power source (not illustrated) through a wire cable connected to the connector 165 to the apparatus 100. In addition, the power supply unit 180 may supply electric power being wirelessly input from an external power source using a wireless recharging scheme to the apparatus 100.

The touch screen 190 may provide a user with a user interface corresponding to various services (for example, a communication, data transmission, broadcasting, an image capturing, or the like). The touch screen 190 may transmit an analog signal corresponding to at least one touch being input to the user interface to the touch screen controller 195. The touch screen 190 may be input with at least one touch by using the body of the user (for example, a finger including a thumb) or touchable input means (for example, a stylus pen). In addition, the touch screen 190 may be input with a continuous movement of one touch among at least one touch. The touch screen 190 may transmit an analog signal corresponding to the input continuous movement of the input touch to the touch screen controller 195.

The touch of embodiments of the present invention is not limited to a contact of the touch screen 190 with the body of the user or the touchable input means, and the touch may include a non-contact touch. The distance that can be detected by the touch screen 190 may be changed depending on the performance or the structure of the apparatus 100.

The touch screen 190 may be implemented by a resistive scheme, a capacitive scheme, an Electronic Magnetic Resonance (EMR) scheme (hereinafter referred to as an EMR scheme), an infrared scheme, or an acoustic wave scheme, and the touch screen 190 may be implemented by a combination of one or more schemes described above.

The touch screen 190 may include a display panel, a first touch panel, and a second touch panel. The display panel may be a panel, such as a Liquid Crystal Display (LCD) or an Active Matrix Organic Light Emitting Diode (AMOLED), and the display panel may display various movies according to the operation state of the apparatus 100, the execution of an application, a service, or the like.

The first touch panel is a capacitive touch panel, in which a thin metal conductive material (for example, an Indium Tin Oxide (ITO) layer) is coated over both surfaces of a glass pane so that electric current flows on the surfaces of the glass pane, and a dielectric substance that can store charges is coated thereon. If the input means (for example, a finger of the user, a pen, or the like) is touched on the surface of the first touch panel, a certain amount of charges move to a touched position due to static electricity, and the first touch panel recognizes the change amount of electric current according to the movement of charges, and detects the touched position. The first touch panel can detect all kinds of touches that can generate static electricity, and thus the first touch panel may detect the touch of the finger or the pen that is the input means.

The second touch panel is an EMR touch panel, and includes an electromagnetic coil sensor (not illustrated) in which a plurality of loop coils are arranged in a first direction and in a second direction intersecting the first direction to form a grid structure, and an electric signal processor (not illustrated) which sequentially provides an alternating signal having a certain frequency to each loop coil of the electromagnetic coil sensor. If a touch pen having a resonance circuit exists near the loop coil of the second touch panel, the magnetic field transmitted from the loop coil generates current to the resonance circuit of the touch pen based on mutual electromagnetic induction. In addition, based on the current, an induction magnetic field is generated from the coil that configures the resonance circuit in the touch pen, and the second touch panel detects the induction magnetic field from the loop coil in a signal reception state. The second touch panel detects the induction magnetic field from the loop coil in the signal reception state, so that a hovering position of the touch pen and the height from the apparatus 100 to the touch pen are detected. The second touch panel can detect hovering and touch of the input means as long as the input means may generate current based on the electromagnetic induction, and it is described that the second touch panel is used to be dedicated to detecting hovering or a touch by the touch pen 200. Further, the touch pen may be referred to as an electromagnetic pen, or an EMR pen. Further, the touch pen may be different from a general pen that is detected through the first touch panel and that does not include the resonance circuit.

The touch screen controller 195 converts an analog signal received from the touch screen 190 to a digital signal (for example, X and Y coordinates) and transmits the converted digital signal to the controller 110. The controller 110 may control the touch screen 190 using the digital signal received from the touch screen controller 195. For example, the controller 110 responds to the touch so that a shortcut icon (not illustrated) displayed on the touch screen 190 is selected or a shortcut icon (not illustrated) is executed. Further, the touch screen controller 195 may be included in the controller 110. The touch screen controller 190 may include a first touch panel controller and a second touch panel controller. The first touch panel controller converts an analog signal received by the first touch panel detecting the touch of the finger or pen to a digital signal (for example, x, y, and z coordinates), and transmits the converted signal to the converter 110. Further, the second touch panel controller converts an analog signal received by the second touch panel detecting the hovering or the touch of the touch pen into a digital signal and transmits the converted signal to the controller 110. In addition, the controller 110 uses the digital signals respectively received from the first and second touch panel controllers to control the display panel, the first touch panel, and the second touch panel. For example, the controller 110 displays a screen on the display panel in response to the hovering and the touch of the finger, the pen, or the touch pen.

Therefore, in the electronic apparatus 100, the first touch panel detects the touch by the finger or the pen of the user, and the second touch panel detects the hovering or the touch of the touch pen. Therefore, the controller 110 of the apparatus 100 may detect the touch by the touch of the finger of the user or the pen, and the hovering and the touch of the touch pen, in a distinctive manner.

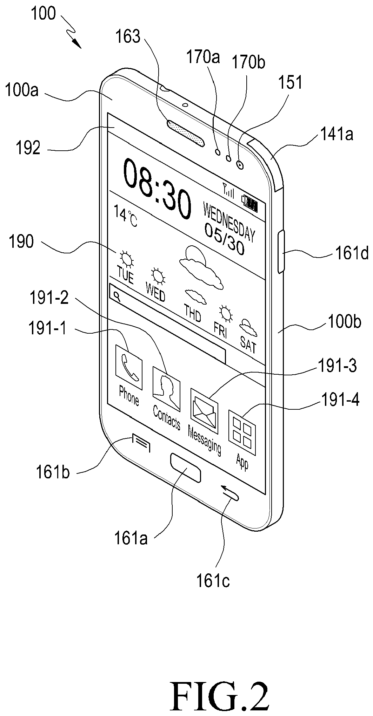

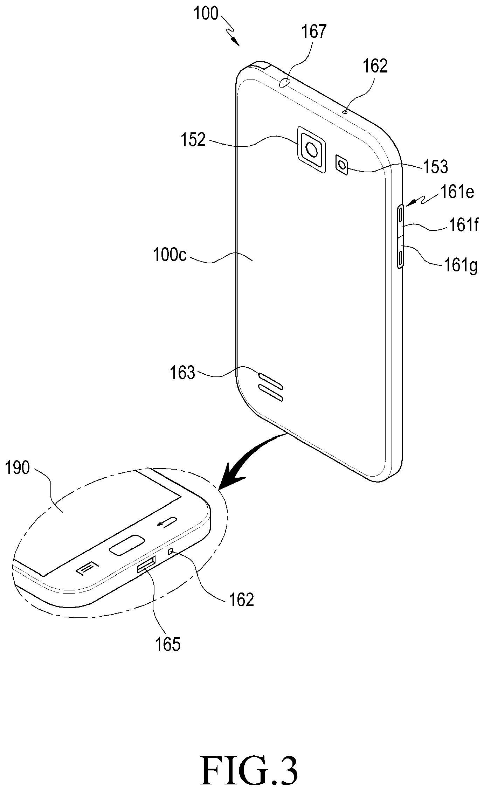

FIG. 2 is a perspective view of a front surface of a mobile apparatus according to an embodiment of the present invention. FIG. 3 is a perspective view of a back surface of a mobile apparatus according to an embodiment of the present invention.

Referring to FIGS. 2 and 3, the touch screen 190 is disposed in the center of a front surface 100a of the apparatus 100. The touch screen 190 is formed to be large enough to cover most of the front surface 100a of the apparatus 100. FIG. 2 is a diagram illustrating an example in which a main home screen is displayed on the touch screen 190. The main home screen is an initial screen displayed on the touch screen 190 when the apparatus 100 is powered on. Further, if the apparatus 100 has different home screens with several pages, the main home screen may be the first home screen among the home screens with several pages. In the home screen, shortcut icons 191-1, 191-2, and 191-3 to execute frequently used applications, an application conversion key 191-4, time, the weather, or the like may be displayed. The application conversion key 191-4 is to display application icons indicating applications on the touch screen 190 on the screen. Further, a status bar 192 that indicates a status of the apparatus 100, such as a battery recharged state, intensity of the received signal, and current time may be formed in the upper portion of the touch screen 190.

A home button 161a, a menu button 161b, and a back button 161c may be formed in the lower portion of the touch screen 190.

The home buttons 161a displays a main home screen on the touch screen 190. For example, when the main home screen, other home screens, and a menu screen are displayed on the touch screen 190, if the home button 161a is pressed (or touched), the main home screen may be displayed on the touch screen 190. In addition, if the home button 161a is pressed (or touched) during the execution of applications on the touch screen 190, the main home screen illustrated in FIG. 2 may be displayed on the touch screen 190. In addition, the home button 161a may be used for displaying recently used applications on the touch screen 190, or for displaying a task manager.

The menu button 161b provides a connection menu that can be used on the touch screen 190. The connection menu may include a widget-adding menu, a wallpaper-changing menu, a search menu, an editing menu, a configuration menu, or the like. In addition, the connection menu connected to the applications may be provided when executing the application.

The back button 161c may display a screen executed right before the currently executed screen, or may quit the most recently used application.

The first camera 151, an illuminance sensor 170a, and a proximity sensor 170b may be disposed on the edge of the front surface 100a of the apparatus 100. The second camera 152, a flash 153, and a speaker 163 may be disposed on a back surface 100c of the apparatus 100.

On a side surface 100b of the apparatus 100, for example, a power/reset button 161d, a volume control button 161e (i.e., a volume up button 161f and a volume down button 161g), a land-based DMB antenna 141a for broadcasting reception, one or a plurality of microphones 162, or the like may be disposed. The DMB antenna 141a may be fixed to the apparatus 100, or may be detachably attached to the apparatus 100.

Further, the connector 165 is formed on the lower portion of the side surface of the apparatus 100. In the connector 165, a plurality of electrodes are formed and may be connected to an external apparatus by wire. The earphone connector jack 167 may be formed on the upper portion of the side surface of the apparatus 100. An ear phone may be inserted to the earphone connector jack 167.

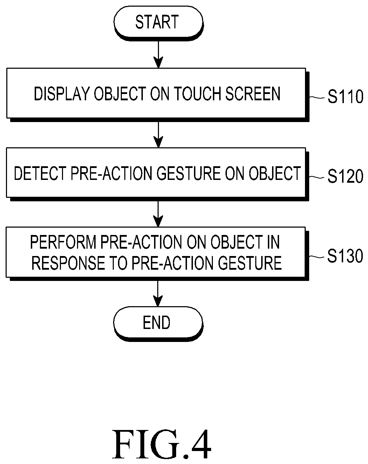

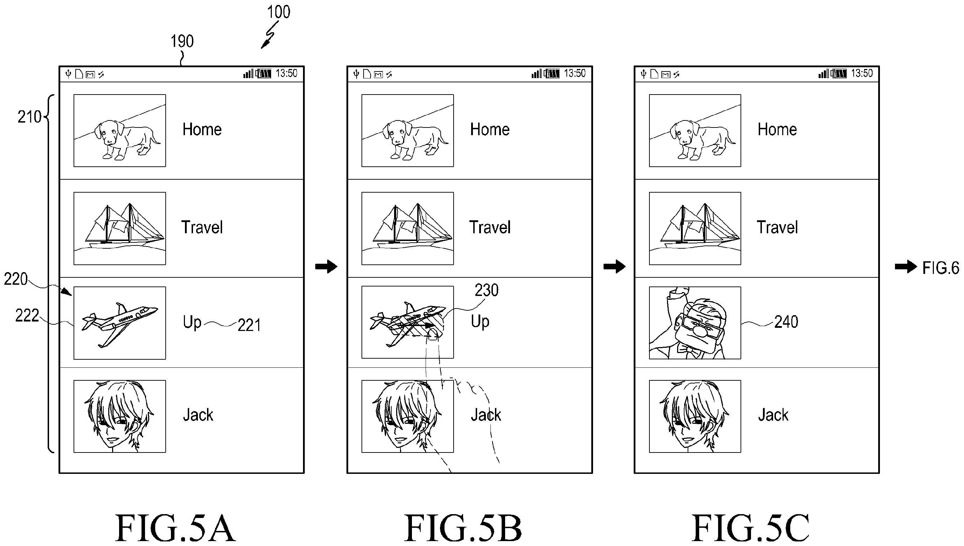

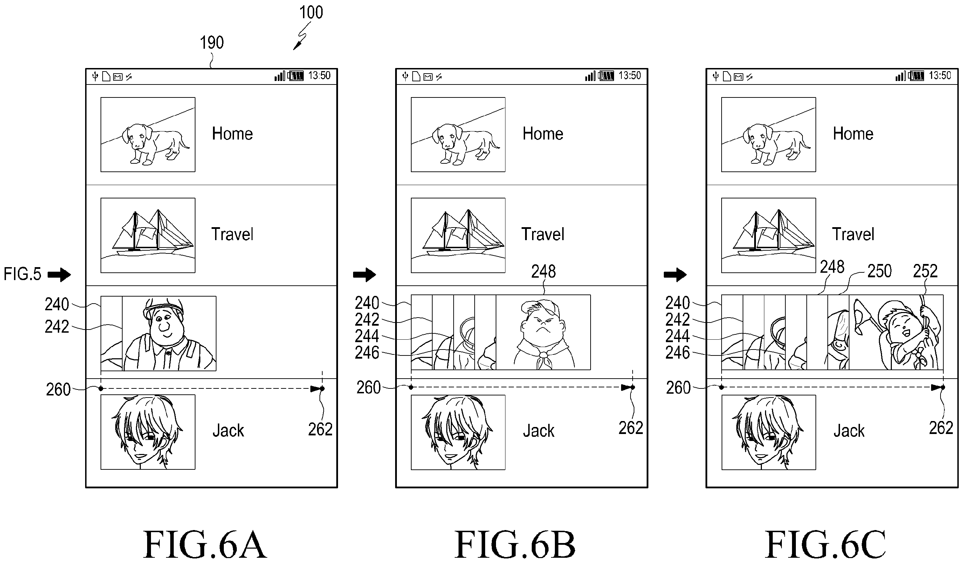

FIG. 4 is a flowchart illustrating a method of controlling a mobile apparatus having a function of a pre-action on an object according to an embodiment of the present invention. FIGS. 5A to 5C and FIGS. 6A to 6C are diagrams illustrating functions of a pre-action on objects according to an embodiment of the present invention.

Referring to FIG. 4, objects are displayed on the touch screen at operation S110. The controller 110 of the mobile apparatus 100 may display the objects on the touch screen 190. For example, the objects may include at least one of media file items, media file thumbnails, and setting items. The media file items may be, for example, image files, video files, audio files, or the like. Further, the media file thumbnails refer to portlets that include important information of media files. At this point, the important information may include the first images, titles, playback time, and writers. The setting items refer to items for changing setting of the mobile apparatus. For example, the setting items may be sounds, screens, languages, dates, and time of the mobile apparatus.

Referring to FIGS. 5A to 5C, for example, the controller 110 may display objects on the touch screen 190 of the mobile apparatus 110. A plurality of objects 210 are thumbnails of the media files and may be presented as illustrated in FIGS. 5A to 5B. The thumbnails of the media files in FIGS. 5A to 5B are thumbnails of video files. The thumbnails of the video file may include the first images and the titles of the video files. For example, in FIG. 5, the thumbnail 220 of a video file includes the first image 222 of the video file and the title 221 like "Up". In addition, the object may be displayed on the touch screen in the form of a list, as illustrated in FIG. 5.

Subsequently, the pre-action gesture on the object is detected at operation S120. The controller 110 may detect the pre-action gesture on the object. At this point, the pre-action gesture may include at least one of a flick, a drag, or a hovering on the object. For example, the pre-action gesture may include at least one of the flick, the drag, or the hovering 230 on the object which is the thumbnail 220 of the video file, as illustrated in FIG. 5B.

Subsequently, the pre-action on the object may be processed in response to the pre-action gesture at operation S130. The controller 110 may process the pre-action on the object in response to the pre-action gesture. For example, at operation S120, if the pre-action gesture is detected, the controller 110 may process the pre-action on the object in response to the pre-action gesture. At this point, the pre-action, may be, for example, one or more items of a preview display, a pre-play, a setting adjustment, or the like. For example, according to an embodiment of the present invention, the pre-action on the object may be performed without entering an operation for performing an action on the object. For example, in order to display a preview display on the object, the preview is displayed after selecting the object and entering the operation. However, if a pre-action gesture on the object is detected, the preview may be directly displayed without entering the operation. Accordingly, the pre-action may be directly performed by detecting the pre-action gesture without entering the operation for performing an action on the object.

Further, the pre-action is a preview display, and the preview display may sequentially display preview images in a time sequence. In FIG. 5B, if the flick, the drag, or the hovering 230 on the thumbnail 220 of the video file corresponding to the object is detected, the controller 110 may display the preview corresponding to the pre-action as illustrated in FIG. 5C. At this point, the preview display may sequentially display preview images in a time sequence, so the controller 110 may display preview images 240 as illustrated in FIG. 5C.

Further, the preview display is to display a first preview image, and to sequentially display a second preview image which is in the next time sequence of the first preview image, along an axis to overlap the first preview image. Accordingly, the controller 110 may first display the first preview image 240 as illustrated in FIG. 5C. Subsequently, the controller 110 may sequentially display a second preview image 242 which is in the next time sequence of the first preview image 240, along one axis to overlap the first preview image 240.

Referring to FIGS. 6A to 6C, the one axis may be a horizontal axis of the touch screen (a horizontal axis in a direction from 260 to 262) as illustrated in FIG. 6A. However, the one axis may be a vertical axis of the touch screen or an axis in a certain direction. Subsequently, as illustrated in FIGS. 6B and 6C, the controller 110 may sequentially display a third preview image 244 which is in the next time sequence of the second preview image 242, along one axis to overlap the second preview image 242, sequentially display a fourth preview image 246 which is in the next time sequence of the third preview image 244, along one axis to overlap the third preview image 244, sequentially display a fifth preview image 248 which is in the next time sequence of the fourth preview image 246, along one axis to overlap the fourth preview image 246, sequentially display a sixth preview image 250 which is in the next time sequence of the fifth preview image 248, along one axis to overlap the fifth preview image 248, and sequentially display a seventh preview image 252 which is in the next time sequence of the sixth preview image 250, along one axis to overlap the sixth preview image 250.

Therefore, the preview display corresponding to the pre-action may be directly performed, by detecting the pre-action gesture without entering an operation for performing a preview display on the object that is a video file thumbnail. Further, preview images for the preview display corresponding to the pre-action may be sequentially displayed according to a time sequence. Further, the preview display corresponding to the pre-action is to display the first preview image, and to sequentially display the second preview image which is in the next time sequence of the first preview image along one axis to overlap the first preview image.

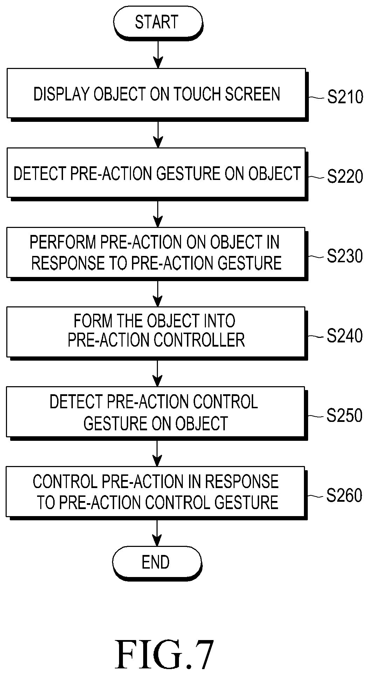

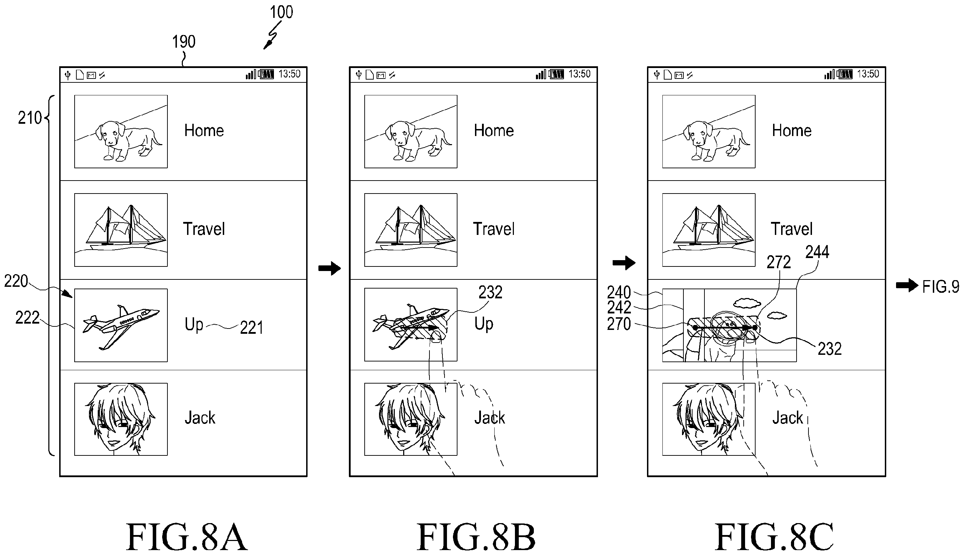

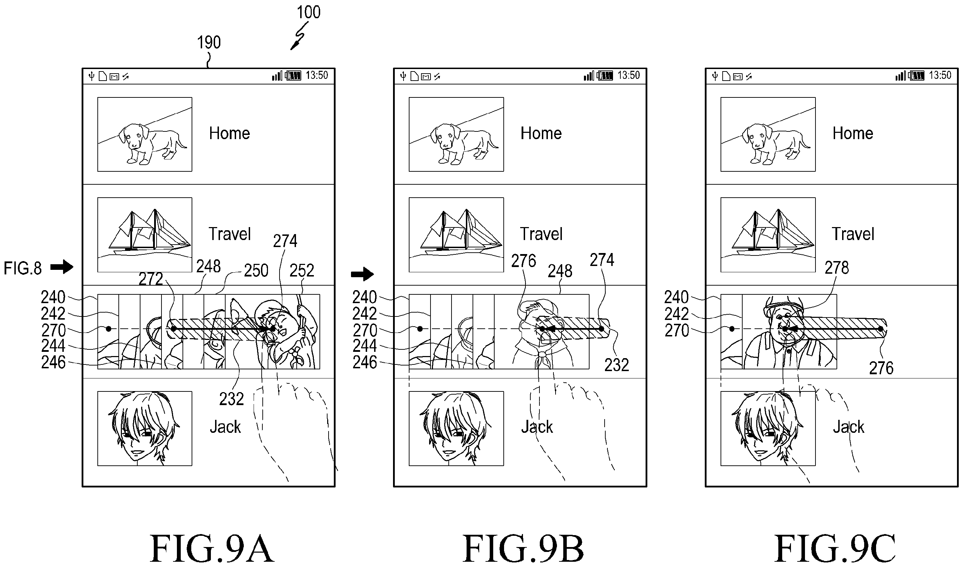

FIG. 7 is a flowchart illustrating a method of controlling a mobile apparatus having a function of a pre-action on an object according to an embodiment of the present invention. FIGS. 8A to 8C and FIGS. 9A to 9C are diagrams illustrating functions of a pre-action on an object according to another embodiment of the present invention.

Referring to FIG. 7, an object is first displayed on the touch screen at operation S210. The controller 110 of the mobile apparatus 100 may display the object on the touch screen 190. For example, the object may include at least one of a media file item, a media file thumbnail, a setting item, or the like. The media file item may be, for example, an image file, a video file, or an audio file. In addition, the media file thumbnail refers to a portlet including important information of the media file. At this point, the important information may include the first image, a title, a playback time, and a writer of the media file. The setting item refers to an item for changing a setting of the mobile apparatus. For example, the setting item may be a sound, a screen, a language, a date, time of the mobile apparatus, or the like.

Referring to FIGS. 8A to 8C, for example, the controller 110 may display the object on the touch screen 190 of the mobile apparatus 110. The plurality of objects 210 are thumbnails of media files, which may be presented as thumbnails of video files. The thumbnails of the video files may include the first images and the titles of the video files. For example, a thumbnail 220 of a video file in FIGS. 8A to 8C may include the first image 222 of the video file and the title 221 like "Up". Further, the object may be provided in the form of a list, and may be displayed on the touch screen.

Subsequently, the pre-action gesture on the object is detected at operation S220. The controller 110 may detect the pre-action gesture of the object. At this point, the pre-action gesture may include at least one of a flick, a drag, or hovering on the object. For example, the pre-action gesture may include at least one of a flick, a drag, or hovering 232 on the object which is the thumbnail 220 of the video file, as illustrated in FIG. 8B.

Subsequently, the pre-action on the object may be performed in response to the pre-action gesture at operation S230. The controller 110 may perform the pre-action on the object in response to the pre-action gesture. For example, at operation S220 as described above, if the pre-action gesture is detected, the controller 110 may perform the pre-action on the object in response to the pre-action gesture. At this point, the pre-action may be, for example, one or more items of a preview display, a pre-play, a setting adjustment, or the like.

Further, the pre-action may be a preview display, and the preview display may sequentially display the preview images in a time sequence. As illustrated in FIG. 8B, if the flick, the drag, or the hovering 232 on the thumbnail 220 of the video file corresponding to the object is detected, the controller 110 may display a preview corresponding to the pre-action as illustrated in FIG. 8C. At this point, since the preview display may sequentially display the preview images in a time sequence, the controller 110 may display preview images 240, 242, and 244 as illustrated in FIG. 8C.

Further, the preview display may be to display the first preview image, and to sequentially display the second preview image which is in the next time sequence of the first preview image along one axis to overlap the first preview image. Accordingly, the controller 110 may first display the first preview image 240 as illustrated in FIG. 8C. Subsequently, the controller 110 may sequentially display the second preview image 242 which is in the next time sequence of the first preview image 240 along one axis to overlap the first preview image 240 as illustrated in FIG. 8C. Here, the one axis may be a horizontal axis of the touch screen (a horizontal axis in a direction from 270 to 276) as illustrated in FIG. 8C. However, the one axis may be a vertical axis of the touch screen or an axis in a certain direction. Further, the controller 110 may sequentially display the third preview image 244 which is in the next time sequence of the second preview image 242 along one axis to overlap the second preview image 242 as illustrated in FIG. 8C.

Subsequently, the object is formed into a pre-action controller at operation S240. The controller 110 may form the object into the pre-action controller. For example, the controller 110 may convert the object itself into the pre-action controller. Accordingly, the object itself may be used as the pre-action controller.

Further, the pre-action controller may be transparent and may be an adjustment bar that controls an increase or a decrease of the adjustment value. Accordingly, if the pre-action controller is used, the adjustment value may be increased or decreased. At this point, the adjustment value may be, for example, the spread or the reduction of the preview image, or an increase or a decrease of the setting value.

Subsequently, the pre-action control gesture on the object is detected at operation S250. The controller 110 may detect a pre-action control gesture on the object formed into the pre-action controller. At this point, the pre-action control gesture may be a drag or hovering on the object formed into the pre-action controller. For example, the pre-action control gesture may be the drag or the hovering 232 on the object formed into the pre-action controller, as illustrated in FIG. 8C.

Subsequently, the pre-action is controlled in response to the pre-action control gesture at operation S260. The controller 110 may control the pre-action in response to the pre-action control gesture. At this point, the control may be the increase or the decrease of the adjustment value. Further, the adjustment value may be, for example, the spread or the reduction of the preview images, or an increase or a decrease of the setting value.

For example, the controller 110 may control the pre-action corresponding to the increase or the decrease of the adjustment value, in response to the pre-action control gesture corresponding to the drag or the hovering on the object. At this point, the increase or the decrease of the adjustment value may be the spread or the reduction of the preview image. Accordingly, the controller 110 may control the pre-action corresponding to the spread or the reduction of the preview images, in response to the pre-action control gesture corresponding to the drag or the hovering on the object.

For example, in response to the pre-action control gesture corresponding to the drag or the hovering on the object detected in FIG. 8B, the controller 110 may control the pre-action corresponding to the spread or the reduction of the preview images as illustrated in FIGS. 8C to 9C.

For example, in response to the pre-action control gesture which is the drag or the hovering 232 on the object corresponding to the preview images, the controller 110 may spread the preview images 240, 242, and 244.

Referring to FIG. 8C, in response to the pre-action control gesture which is the drag or the hovering 232 on the object from point 270 to point 272, the controller 110 may spread the preview images of the first preview image 240, the second preview image 242, and the third preview image 244. At this point, the drag or hovering from point 270 to point 272 corresponding to the drag or the hovering 232 on the object may be a drag or hovering from around the center of the first preview image 240 to around the center of the third preview image 244. Accordingly, the controller 110 may spread or reduce the preview images in response to the drag or the hovering to around the center of the object.

Subsequently, referring to FIG. 9A, in response to the pre-action control gesture which is the drag or the hovering 232 on the object from point 272 to point 274, the controller 110 may spread the preview images of the fourth preview image 246, the fifth preview image 248, the sixth preview image 250, and the seventh preview image 252. At this point, the drag or the hovering from point 272 to point 274 corresponding to the drag or the hovering 232 on the object may be a drag or hovering from around the center of the fourth preview image 246 to around the center of the seventh preview image 252.

Subsequently, with response to FIG. 9B, in response to the pre-action control gesture which is the drag or the hovering 232 on the object from point 274 to point 276, the controller 110 may reduce the preview images of the sixth preview image 250 and the seventh preview image 252. At this point, the drag or the hovering from point 274 to point 276 corresponding to the drag or the hovering 232 of the object may be a drag or hovering from around the center of the seventh preview image 252 to around the center of the fifth preview image 248.

Subsequently, referring to FIG. 9C, in response to the pre-action control gesture which is the drag or the hovering 232 on the object from point 276 to point 278, the controller 110 may reduce the preview images of the fifth preview image 248 and the third preview image 244. At this point, the drag or the hovering from point 276 to point 278 corresponding to the drag or the hovering 232 on the object may be a drag or hovering from around the center of the fifth preview image 248 to around the center of the second preview image 242.

Therefore, the pre-action may be controlled in response to the pre-action control gesture. For example, in response to the pre-action control gesture on the object, the pre-action, such as the increase or the decrease of the adjustment value, may be controlled. At this point, the adjustment value may be, for example, the spread or the reduction of the preview images. Therefore, in response to the pre-action control gesture on the object, the pre-action, such as the spread or the reduction of the preview images, may be controlled. Therefore, the increase or the decrease of the adjustment value can be controlled by forming the object into the pre-action controller. For example, the increase or the decrease of the adjustment value can be controlled by directly using the object without entering the operation of controlling the increase or the decrease of the adjustment values.

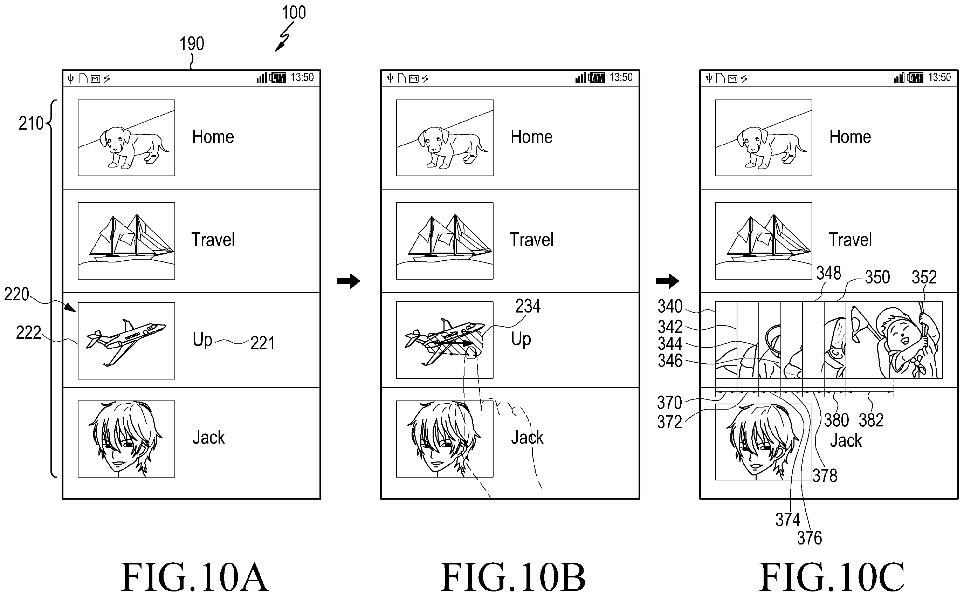

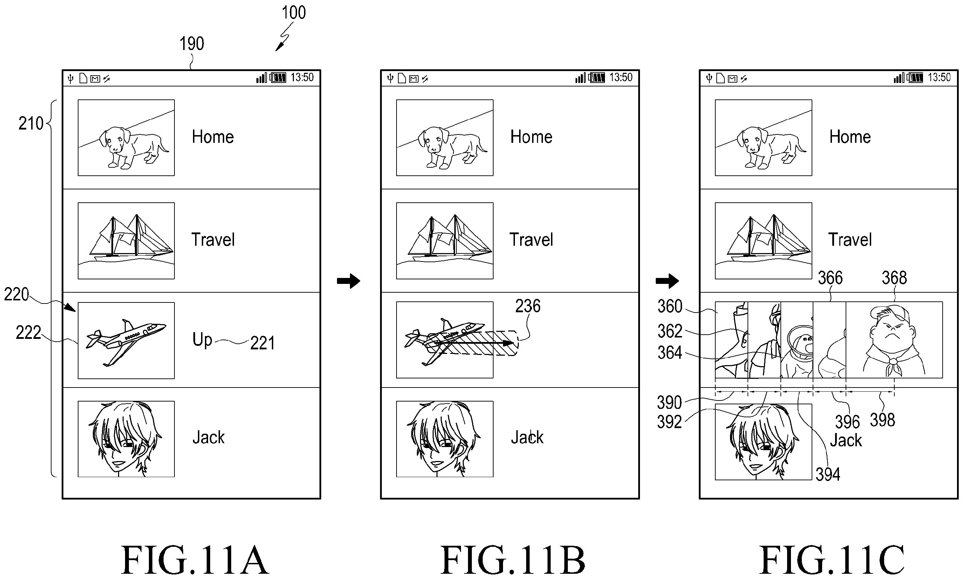

FIGS. 10A to 10C and FIGS. 11A to 11C are diagrams illustrating functions of a pre-action on an object according to an embodiment of the present invention.

With reference back to FIG. 4, an object is first displayed on the touch screen at operation S110. The controller 110 of the mobile apparatus 100 may display the object on the touch screen 190. For example, the object may be a media file item, a media file thumbnail, or a setting item. The media file may be, for example, an image file, a video file, or an audio file. Further, the media file thumbnail refers to a portlet that includes important information of the media file. At this point, the important information may include a first image, a title, a playback time, and a writer. The setting item refers to an item for changing the setting of the mobile apparatus. For example, the setting item may be a sound, a screen, a language, a date, or time of the mobile apparatus.

Referring to FIGS. 10A to 10C, for example, the controller 110 may display the object on the touch screen 190 of the mobile apparatus 110. Moreover, the plurality of objects 210 are thumbnails of the media file, which are thumbnails of video files. The thumbnails of the video files may include the first images and the titles of the video files. For example, the thumbnail 220 of the video file in FIGS. 10A to 10C includes the first image 222 of the video file and the title 221 like 'Up'. Further, the object may be displayed on the touch screen in the form of a list as illustrated in FIGS. 10A to 10C.

Subsequently, a pre-action gesture on the object is detected at operation S120. The controller 110 may detect the pre-action gesture on the object. At this point, the pre-action gesture may include at least one of a flick, a drag, or hovering on the object. For example, the pre-action gesture may include at least one of a flick, a drag, or hovering 234 on the object which is the thumbnail 220 of the video file, as illustrated in FIG. 10B.

Subsequently, the pre-action on the object is performed in response to the pre-action gesture at operation S130. The controller 110 may perform the pre-action on the object in response to the pre-action gesture. For example, if the pre-action gesture is detected at operation S120, the controller 110 may perform the pre-action on the object in response to the pre-action gesture. At this point, the pre-action may be, for example, one or more items of a preview display, a pre-play, a setting adjustment, or the like.

Further, the pre-action is a preview display, and the preview display may sequentially display preview images in a time sequence. In FIG. 10B, if the flick, the drag, or the hovering 234 on the thumbnail 220 of the video file corresponding to the object is detected, the controller 110 may display a preview corresponding to the pre-action, as illustrated in FIG. 10C. At this point, the preview display may sequentially display preview images in a time sequence, the controller 110 may display preview images 340 to 352.

Further, the preview display may be to display the first preview image, and to sequentially display the second preview image which is in the next time sequence of the first preview image along one axis to overlap the first preview image. Accordingly, the controller 110 first displays a first preview image 340 as illustrated in FIG. 10C, and to sequentially display a second preview image 342 which is in the next time sequence of the first preview image 340 along one axis to overlap the first preview image 340. Subsequently, the controller 110 sequentially displays a third preview image 344 which is in the next time sequence of the second preview image 342 along one axis to overlap the second preview image 342. Subsequently, the controller 110 sequentially displays preview images from a fourth preview image 346 to a seventh preview image 352.

The preview image display may be to make the positional distances among the preview images to be shorter, as the speed of the pre-action gesture is slower, and to make the positional distances among the preview images to be longer, as the speed of the pre-action gesture is faster. At this point, the positional distances among the preview images may be, for example, a distance 370 from the left side of the first preview image 340 to the left side of the second preview image 370, as illustrated in FIG. 10C.

Referring to FIGS. 11A to 11C,a description is made by comparing FIGS. 10A to 10C with FIGS. 11A to 11C. In FIGS. 10A to 10C, if the speed of the pre-action gesture 234 is slower than the speed of the pre-action gesture 236, the controller 110 may make the positional distances 370 to 382 among the preview images illustrated in FIGS. 10A to 10C to be shorter than the positional distances 390 to 398 among the preview images illustrated in FIGS. 11A to 11C. For example, the controller 110 may make the positional distances among the preview images to be shorter, as the speed of the pre-action gesture is slower. Moreover, the controller 110 may make positional distances among the preview images to be shorter, as the speed of the pre-action gesture is slower, so that more preview images can be displayed. Accordingly, the user may view more preview images by slowing down the speed of the pre-action gesture.

Therefore, the preview display may be provided in a manner that the positional distances among preview images are shorter as the speed of the pre-action gesture is slower, and the positional distances among preview images are longer as the speed of the pre-action gesture is faster. At this point, the preview display may sequentially display preview images in a time sequence, the controller 110 may display preview images 360 to 368.For example, the number of preview images to be displayed is adjusted by adjusting positional distances among the preview images in response to the speed of the pre-action gesture.

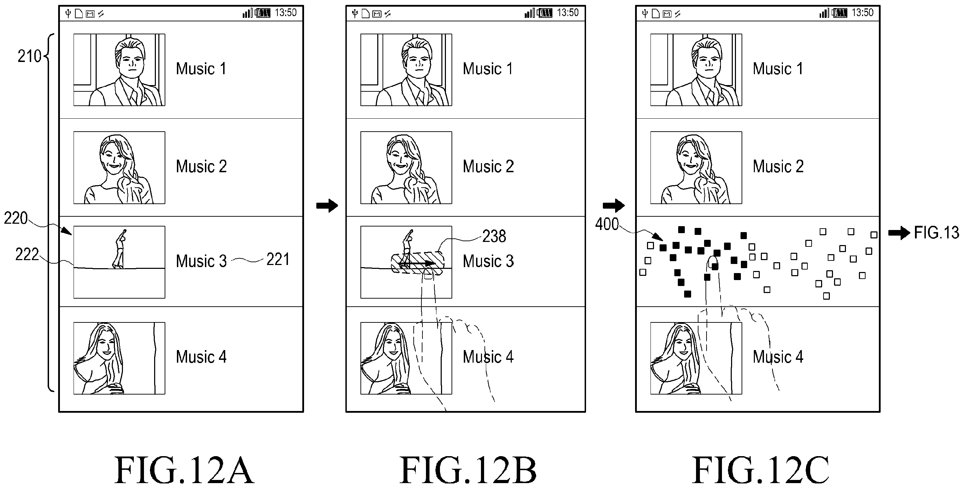

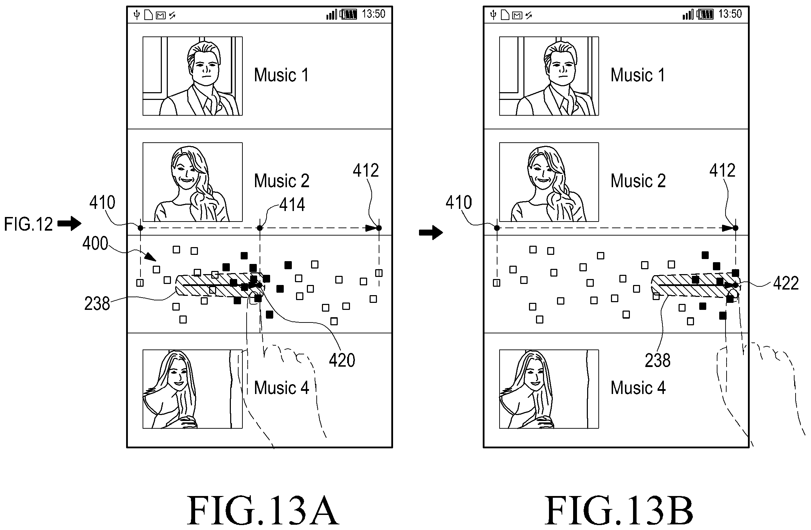

FIGS. 12A to 12C and FIGS. 13A and 13B are diagrams illustrating functions of a pre-action on an object according to an embodiment of the present invention.

With reference back to FIG. 7, an object is displayed on the touch screen at operation S210. The controller 110 of the mobile apparatus 100 may display an object on the touch screen 190. For example, the object may include at least one of a media file item, a media file thumbnail, a setting item, or the like. The media file item may be, for example, an image file, a video file, or an audio file. In addition, the media file thumbnail refers to a portlet including important information of the media file. At this point, the important information may include a first image, a title, a playback time, and a writer of the media file. The setting item refers to an item for changing the setting of the mobile apparatus. For example, the setting item may be a sound, a screen, a language, a date, time of the mobile apparatus, or the like. For example, the controller 110 may display the object on the touch screen 190 of the mobile apparatus 110, as illustrated in FIGS. 12A to 12C.

Referring to FIGS. 12A to 12C, a plurality of objects 210 are thumbnails of the media files, which are thumbnails of audio files. The thumbnails of the audio files may include images and titles of the audio files. For example, in FIGS. 12A to 12C, a thumbnail 220 of an audio file includes an image 222 of the audio file and the title 221 like "Music 3". In addition, the object may be provided in the form of a list, as illustrated in FIGS. 12A to 12C and be displayed on the touch screen.

Subsequently, the pre-action gesture on the object is detected at operation S220. The controller 110 may detect the pre-action gesture on the object. At this point, the pre-action gesture may include at least one of a flick, a drag, or hovering on the object. For example, the pre-action gesture may include at least one of a flick, a drag, or hovering 238 on the object which is the thumbnail 220 of the audio file, as illustrated in FIG. 12B.

Subsequently, the pre-action on the object is performed in response to the pre-action gesture at operation S230. The controller 110 may perform the pre-action on the object in response to the pre-action gesture. For example, if the pre-action gesture is detected at operation S220 described above, the controller 110 may perform the pre-action on the object in response to the pre-action gesture. At this point, the pre-action may be, for example, a pre-play of the audio file. Therefore, if the flick, the drag, or the hovering 238 on the thumbnail 220 of the audio file corresponding to the object is detected in FIG. 12B, the controller 110 may pre-play the audio file. The pre-play of the audio file refers to playing the audio file for a considerably short time, not playing the entire audio file. Therefore, if the pre-play of the audio file is provided, the user may listen to the rough sound of the audio file.

Subsequently, the object is formed into the pre-action controller at operation S240. The controller 110 may form the object into the pre-action controller. Further, the pre-action controller may be a watermark effect. Further, if the pre-action controller is used, the adjustment value may be increased or decreased. At this point, the adjustment value may be, for example, fast-forwarding or rewinding the pre-play of the audio file.

For example, the pre-action controller may be a water mark effect 400 that controls the increase or the decrease of the adjustment value corresponding to the fast-forwarding or the rewinding of the pre-play of the audio file as illustrated in FIG. 12C. The water mark effect may be displayed with a solid water mark at a point where the pre-play of the audio file is performed.

Subsequently, the pre-action control gesture on the object is detected at operation S250. The controller 110 may detect the pre-action control gesture on the object. For example, the controller 110 may detect the pre-action control gesture on the object formed into the pre-action controller.

At this point, the pre-action control gesture may be a drag or hovering on the object formed into the water mark effect 400. For example, the pre-action control gesture may be the drag or the hovering 238 on the object formed into the water mark effect 400, as illustrated in FIG. 12C.

Subsequently, the pre-action is controlled in response to the pre-action control gesture at operation S260. The controller 110 may control the pre-action in response to the pre-action control gesture. At this point, the control may be the increase or the decrease of the adjustment value. Further, the adjustment value may be, for example, the spread or the reduction of preview images, or the increase or the decrease of the setting value.

For example, the controller 110 may control the pre-action corresponding to the increase or the decrease of the adjustment value, in response to the pre-action control gesture corresponding to the drag or the hovering on the object. At this point, the increase or the decrease of the adjustment value may be fast-forwarding or rewinding the pre-play of the audio file. Therefore, the controller 110 may control the pre-action corresponding to fast-forwarding or rewinding the pre-play of the audio file, in response to the pre-action control gesture corresponding to the drag or the hovering on the object.

Referring to FIGS. 13A and 13B,for example, the controller 110 may control the pre-action corresponding to fast-forwarding or rewinding the pre-play of the audio file in response to the pre-action control gesture corresponding to the drag or the hovering on the object detected in FIG. 13A.

For example, the controller 110 may perform fast-forwarding or rewinding the pre-play of the audio file, in response to the pre-action control gesture which is the drag or the hovering 238 on the object corresponding to the water mark effect.

Referring to FIG. 13A, point 410 which is the leftmost of the water mark effect is an initial reproduction point of the pre-play of the audio file, and point 412 which is the rightmost of the water mark effect is a final reproduction point of the pre-play of the audio file. Further, point 414 of the water mark effect is the reproduction point according to the distance ratio between point 410 which is the leftmost of the water mark effect and point 412 which is the rightmost of the water mark effect. For example, point 414 of the water mark effect corresponds to a point of 50% between point 410 which is the leftmost of the water mark effect and point 412 which is the rightmost of the water mark effect, as illustrated in FIG. 13A. At this point, the controller 110 may pre-play the point of 50% from the pre-play point of the entire audio file. Therefore, if a drag or hovering to point 420 on the water mark effect is detected as illustrated in FIG. 13A, the controller 110 may pre-play the point of 50% from the pre-play point of the entire audio file. Further, the controller 110 may display point 420 with a solid water mark on the water mark effect, as illustrated in FIG. 13A. Subsequently, referring to FIG. 13B, point 412 of the water mark effect corresponds to a point of 100% between point 410 which is the leftmost of the water mark effect and point 412 which is the rightmost of the water mark effect. At this point, the controller 110 may pre-play the point of 100% from the pre-play point of the entire audio file. Therefore, if a drag or hovering to point 422 on the water mark effect is detected, the controller 110 may pre-play the final point which is the point of 100% from the pre-play point of the entire audio file. In addition, the controller 110 may display point 422 on the water mark effect with a solid water mark, as illustrated in FIG. 13B.

Therefore, if a drag or hovering in the right direction, which is the direction of the final reproduction point for the pre-play of the audio file, is detected, the controller 110 may fast-forward the pre-play of the audio file. Otherwise, if a drag or hovering in the left direction, which is the direction of the initial reproduction point for the pre-play of the audio file, is detected, the controller 110 may rewind the pre-play of the audio file.

Therefore, the pre-action, such as fast-forwarding or rewinding the pre-play of the audio file, may be controlled in response to the pre-action control gesture on the object. For example, fast-forwarding or rewinding the pre-play of the audio file corresponding to the increase or the decrease of the adjustment value may be directly controlled using the object without entering an operation of controlling fast-forwarding or rewinding the pre-play of the audio file corresponding to the increase or the decrease of the adjustment.

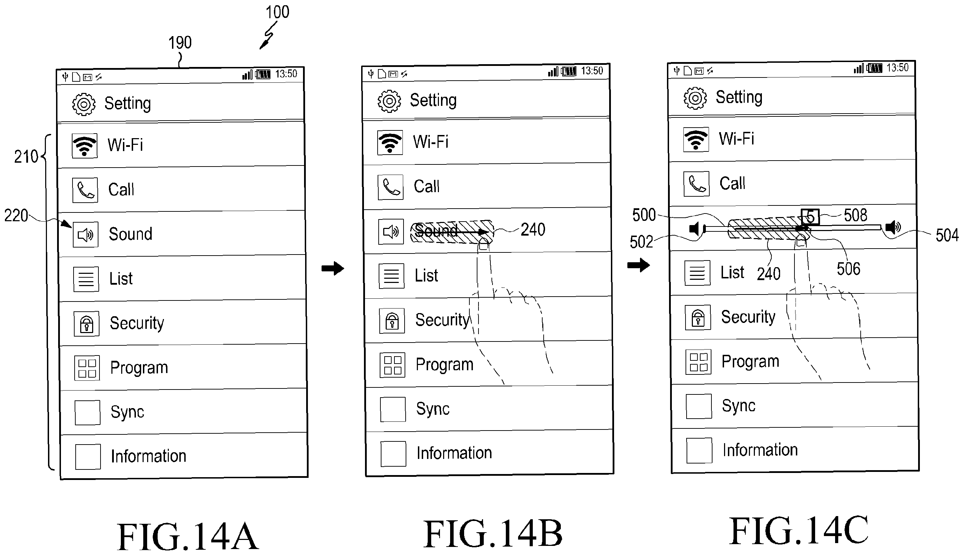

FIGS. 14A to 14C are diagrams illustrating functions of a pre-action on an object according to an embodiment of the present invention.

With reference back to FIG. 7, an object is first displayed on the touch screen at operation S210. The controller 110 of the mobile apparatus 100 may display the object on the touch screen 190. For example, the object may be a setting item. The setting item refers to an item that changes the setting of the mobile apparatus. For example, the setting item may be a Wi-Fi setting, a call setting, a sound, and a screen of the mobile apparatus.

Referring to FIGS. 14A to 14C, for example, the controller 110 may display objects corresponding to the setting items 210 on the touch screen 190 of the mobile apparatus 110. For example, in FIGS. 14A to 14C, the setting item 210 includes a Wi-Fi setting, a call setting, a sound 220, and a screen.

Subsequently, the pre-action gesture on the object is detected at operation S220. The controller 110 may detect the pre-action gesture on the object. At this point, the pre-action gesture may include at least one of a flick, a drag, or hovering on the object. For example, the pre-action gesture may include at least one of the flick, the drag, or the hovering 240 on the setting item 220, as illustrated in FIG. 14B.

Subsequently, the pre-action on the object is performed in response to the pre-action gesture at operation S230. The controller 110 may perform the pre-action on the object in response to the pre-action gesture. For example, if the pre-action gesture is detected at operation S220 described above, the controller 110 may perform the pre-action on the object in response to the pre-action gesture. At this point, the pre-action may be, for example, setting adjustment. Therefore, if the flick, the drag, or the hovering 240 on the setting item 220 corresponding to the object is detected in FIG. 14B, the controller 110 may adjust the setting.

For example, the pre-action may be performed without entering an operation for the execution on the object. For example, in order to perform the setting adjustment, the setting should be adjusted after selecting the setting item and entering the operation. However, if the pre-action gesture on the object corresponding to the setting item is detected, the setting can be adjusted without entering the operation.

Subsequently, the object is formed into the pre-action controller at operation S240. The controller 110 may form the object into the pre-action controller. Further, the pre-action controller may be an adjustment bar that controls the increase or the decrease of the adjustment value. Further, if the pre-action controller is used, the adjustment value may be increased or decreased. At this point, the adjustment value may be, for example, the increase or the decrease of the setting value. For example, the pre-action controller may be an adjustment bar 500 that controls the increase or the decrease of the adjustment value corresponding to the increase or the decrease of the setting value, as illustrated in FIG. 14C.

Subsequently, the pre-action control gesture on the object may be detected at operation S250. The controller 110 may detect the pre-action control gesture on the object. For example, the controller 110 may detect the pre-action control gesture on the object formed into the pre-action controller.

At this point, the pre-action control gesture may be a drag or hovering on the object formed into the adjustment bar 500. For example, as illustrated in FIG. 14C, the pre-action control gesture may be the drag, or the hovering 240 on the object formed in to the adjustment bar 500.

Subsequently, the pre-action may be controlled in response to the pre-action control gesture at operation S260. The controller 110 may control the pre-action in response to the pre-action control gesture. At this point, the control may be the increase or the decrease of the adjustment value. Further, the adjustment value may be the increase or the decrease of the setting value.

Accordingly, the controller 110 may control the pre-action corresponding to fast-forwarding and rewinding the pre-play of the audio file, in response to the pre-action control gesture corresponding to the drag or hovering on the object.

For example, the controller 110 may control the pre-action corresponding to the increase and the decrease of the setting value, in response to the pre-action control gesture corresponding to the drag or the hovering on the object which is the adjustment bar 500 detected in FIG. 14C.

Referring to FIG. 14C, point 502 which is the leftmost of the adjustment bar 500 is the minimum point of the setting value, and point 504 which is the rightmost of the adjustment bar 500 is the maximum point of the setting value. Further, point 506 of the adjustment bar is a point of the setting bar according to the distance ratio between point 502 which is the leftmost of the adjustment bar and point 504 which is the rightmost of the adjustment bar. For example, point 506 of the adjustment bar corresponds to the point of 50% between point 502 which is the leftmost of the adjustment bar and point 504 which is the rightmost of the adjustment bar, as illustrated in FIG. 14C. At this point, if the maximum value of the setting value is 10, the controller 110 may adjust the setting value to 5. In addition, the controller 110 may perform a display 508 with respect to the setting value with a figure of 5

Accordingly, if the drag or the hovering in the right direction, which is a direction of the maximum point of the adjustment bar, is detected, the controller 110 may increase the setting value. Otherwise, if the drag or the hovering in the left direction, which is a direction of the minimum point of the adjustment bar, is detected, the controller 110 may decrease the setting value.

Therefore, the pre-action, such as the increase or the decrease of the adjustment bar, may be controlled in response to the pre-action control gesture on the object. For example, the increase or the decrease of the setting value corresponding to the increase or the decrease of the adjustment value may be controlled without entering an operation of controlling the increase or the decrease of the adjustment bar corresponding to the increase or the decrease of the adjustment value.

It may be understood that embodiments of the present invention may be implemented by hardware, software, or a combination of hardware and software. The optional software may be stored in a volatile or non-volatile storage unit, such as a ROM, a memory, such as a RAM, a memory chip, or an integrated circuit, an optically or magnetically recordable and machine-readable (for example, a computer-readable) storage unit, such as a Compact Disc (CD), a Digital Video Disc (DVD), a magnetic disc, or a magnetic tape, regardless of erasability or re-writability. A method of updating a graphic screen may be implemented by a computer or a portable device including a controller or a memory, and the memory is an example of a machine-readable storage medium appropriate for storing a program or programs including instructions to implement embodiments of the present invention. Accordingly, the present invention includes programs including codes to implement apparatuses or methods described in any claims of the present invention or a machine-readable (for example, computer-readable) storage medium storing the programs.

In addition, the mobile apparatus may receive the programs from a program providing apparatus connected by a wire or wirelessly, and may store the program. The terminal or the server may include a memory for storing programs including instructions that enable the terminal or the server to perform content protection methods, information required for the content protection methods, or the like, a communication unit for performing a wired or wireless communications with the graphic processing apparatus, and a controller for transmitting the corresponding programs to the transmitting and receiving apparatuses automatically or under the request of the graphic processing apparatus.

While the invention has been shown and described with reference to various embodiments thereof, it will be understood by those skilled in the art that various changes in form and details may be made therein without departing from the scope of the invention as defined by the appended claims and their equivalents.

## Claims

1. A method of controlling a mobile apparatus (100) having a function of a pre-action on an object, the method comprising:
displaying (S210) at least one object on a touch screen (190);
detecting (S220) a pre-action gesture on a first object among the at least one object, wherein the pre-action gesture comprises at least one of a flick, a drag and a hovering on the object; and
in response to receiving the pre-action gesture on the first object, displaying, from a position of the first object on the touch screen, a preview display of the first object, **characterized in that** the preview display comprises sequentially displaying preview images (240-252) in a time sequence, along one axis, wherein each subsequent preview image overlaps the previous image in the sequence; and the displaying the preview display further comprises shortening positional distances among the displayed preview images as the pre-action gesture is slower, and lengthening positional distances among preview images as the pre-action gesture is faster.

2. The method of claim 1, wherein the at least one object comprises at least one of a media file item or a media file thumbnail.

3. The method of claim 1, further comprising:
forming (240) the object into a pre-action controller, wherein the performed pre-action of the object is controlled (260) in response to detecting (S250) a pre-action control gesture on the object formed into the pre-action controller.

4. A mobile apparatus (100) having a function of a pre-action on an object, the apparatus comprising:
a touch screen (190) for displaying at least one object; and
a controller (110) configured to:
detect a pre-action gesture on a first object among the at least one object, wherein the pre-action gesture comprises at least one of a flick, a drag, and a hovering on the object, and
in response to receiving the pre-action gesture on the first object, display, from a position of the first object on the touch screen (190), a preview display of the first object,
**characterized in that** the preview display comprises sequentially displaying preview images (240-252) in a time sequence, along one axis, wherein each subsequent preview image overlaps the previous image in the sequence; and
the controller (110) is configured to display the preview display by shortening positional distances among the displayed preview images as the pre-action gesture is slower, and for lengthening positional distances among preview images as the pre-action gesture is faster.

5. The mobile apparatus (100) of claim 4, wherein the controller is configured to form the object into a pre-action controller, wherein the performed pre-action of the object is controlled (260) in response to detecting (S250) a pre-action control gesture on the object formed into the pre-action controller.

## Patentansprüche

1. Verfahren zum Steuern einer mobilen Vorrichtung (100) mit einer Funktion einer Vorab-Aktion an einem Objekt, wobei das Verfahren aufweist:
ein Anzeigen (S210) von mindestens einem Objekt auf einem Berührungsbildschirm (190);
ein Erkennen (S220) einer Vorab-Aktionsgeste an einem ersten Objekt von dem mindestens einen Objekt, wobei die Vorab-Aktionsgeste mindestens eines von einem Schnippen, einem Ziehen und einem Bewegen über das Objekt aufweist;
und in Reaktion auf ein Empfangen der Vorab-Aktionsgeste an dem ersten Objekte ein Anzeigen einer Vorschau-Anzeige des ersten Objekts von einer Position des ersten Objekts auf dem Berührungsbildschirm, **dadurch gekennzeichnet, dass** die Vorschau-Anzeige ein aufeinanderfolgendes Anzeigen von Vorschaubildern (240 bis 252) in einer Zeitfolge entlang einer Achse aufweist, wobei jedes nachfolgende Vorschaubild das vorherige Bild in der Abfolge überlappt;
und das Anzeigen der Vorschau-Anzeige ferner ein Verkürzen von Positionsdistanzen unter den angezeigten Vorschaubildern aufweist, wenn die Vorab-Aktionsgeste langsamer ist, und ein Verlängern von Positionsdistanzen unter den Vorschaubildern, wenn die Vorab-Aktionsgeste schneller ist.

2. Verfahren nach Anspruch 1, wobei das mindestens eine Objekt mindestens ein Mediendatei-Element oder eine Mediendatei-Miniaturansicht aufweist.

3. Verfahren nach Anspruch 1, ferner aufweisend:
ein Ausbilden (240) des Objekts in einen Vorab-Aktions-Controller, wobei die ausgeführte Vorab-Aktion des Objekts in Reaktion auf ein Erkennen (S250) einer Vorab-Aktionssteuergeste an dem Objekt gesteuert (260) wird, das in den Vorab-Aktions-Controller ausgebildet ist.

4. Mobile Vorrichtung (100) mit einer Funktion einer Vorab-Aktion an einem Objekt, wobei die Vorrichtung aufweist:
einen Berührungsbildschirm (190) zum Anzeigen von mindestens einem Objekt; und einen Controller (110), der konfiguriert ist zum:
Erkennen einer Vorab-Aktionsgeste an einem ersten Objekt unter dem mindestens einen Objekt, wobei die Vorab-Aktionsgeste mindestens eines von einem Schnippen, einem Ziehen und einem Bewegen über das Objekt aufweist, und in Reaktion auf ein Empfangen der Vorab-Aktionsgeste an dem ersten Objekte ein Anzeigen einer Vorschau-Anzeige des ersten Objekts von einer Position des ersten Objekts auf dem Berührungsbildschirm (190), **dadurch gekennzeichnet, dass** die Vorschau-Anzeige ein aufeinanderfolgendes Anzeigen von Vorschaubildern (240 bis 252) in einer Zeitfolge entlang einer Achse aufweist, wobei jedes nachfolgende Vorschaubild das vorherige Bild in der Abfolge überlappt;
und der Controller (110) konfiguriert ist zum Anzeigen der Vorschau-Anzeige durch Verkürzen von Positionsdistanzen unter den angezeigten Vorschaubildern, wenn die Vorab-Aktionsgeste langsamer ist, und zum Verlängern von Positionsdistanzen unter den Vorschaubildern, wenn die Vorab-Aktionsgeste schneller ist.

5. Mobile Vorrichtung (100) nach Anspruch 4, wobei der Controller konfiguriert ist zum Ausbilden des Objekts in einen Vorab-Aktions-Controller, wobei die ausgeführte Vorab-Aktion des Objekts in Reaktion auf ein Erkennen (S250) einer Vorab-Aktionssteuergeste an dem Objekt gesteuert (260) wird, das in den Vorab-Aktions-Controller ausgebildet ist.

## Revendications

1. Procédé de commande d'un appareil mobile (100) possédant une fonction de pré-action sur un objet, le procédé comprenant :
l'affichage (S210) d'au moins un objet sur un écran tactile (190) ;
la détection (S220) d'un geste de pré-action sur un premier objet parmi l'au moins un objet, dans lequel le geste de pré-action comprend au moins l'un d'un feuilletage, un glisser et un passage de souris sur l'objet ;
et en réponse à la réception du geste de pré-action sur le premier objet, l'affichage, depuis une position du premier objet sur l'écran tactile, d'un affichage de prévisualisation du premier objet, **caractérisé en ce que** l'affichage de prévisualisation comprend l'affichage séquentiel d'images de prévisualisation (240 - 252) dans une séquence temporelle, le long d'un axe, dans lequel chaque image de prévisualisation consécutive chevauche l'image précédente dans la séquence ;
et l'affichage de l'affichage de prévisualisation comprend en outre le rétrécissement de distances de position entre les images de prévisualisation affichées quand le geste de pré-action est plus lent, et l'allongement de distances de position entre les images de prévisualisation quand le geste de pré-action est plus rapide.

2. Procédé selon la revendication 1, dans lequel l'au moins un objet comprend au moins l'un d'un élément de fichier multimédia ou une vignette de fichier multimédia.

3. Procédé selon la revendication 1, comprenant en outre :
la formation (240) de l'objet dans une unité de commande de pré-action, dans lequel la pré-action exécutée de l'objet est commandée (260) en réponse à la détection (S250) d'un geste de commande de pré-action sur l'objet formé dans l'unité de commande de pré-action.

4. Appareil mobile (100) possédant une fonction de pré-action sur un objet, l'appareil comprenant :
un écran tactile (190) permettant d'afficher au moins un objet ; et
une unité de commande (110) configurée pour :
détecter un geste de pré-action sur un premier objet, parmi l'au moins un objet, dans lequel le geste de pré-action comprend au moins l'un d'un feuilletage, un glisser et un passage de souris sur l'objet, et en réponse à la réception du geste de pré-action sur le premier objet, afficher, depuis une position du premier objet sur l'écran tactile (190), un affichage de prévisualisation du premier objet, **caractérisé en ce que** l'affichage de prévisualisation comprend l'affichage séquentiel d'images de prévisualisation (240 - 252) dans une séquence temporelle, le long d'un axe, dans lequel chaque image de prévisualisation consécutive chevauche l'image précédente dans la séquence ;
et l'unité de commande (110) est configurée pour afficher l'affichage de prévisualisation en rétrécissant des distances de position entre les images de prévisualisation affichées quand le geste de pré-action est plus lent, et en allongeant des distance de position entre les images de prévisualisation quand le geste de pré-action est plus rapide.

5. Appareil mobile (100) selon la revendication 4, dans lequel l'unité de commande est configurée pour former l'objet dans une unité de commande de pré-action, dans lequel la pré-action exécutée de l'objet est commandée (260) en réponse à la détection (S250) d'un geste de commande de pré-action sur l'objet formé dans l'unité de commande de pré-action.
